# EUROPEAN PATENT APPLICATION

(11) **EP 4 138 017 A1**
(43) Date of publication of application: **22.02.2023**
(21) Application number: 20931395.6
(22) Date of filing: 14.04.2020
(51) Int. Cl.: G06Q 30/02, G09F 21/02

(54) **METHOD AND SYSTEM OF ADAPTIVE ADVERTISING AND INFORMING**

(71) Applicant: Tkachenko, Artem Sergeevich, g. Novouralsk Sverdlovskaya obl., 624130 (RU)
(72) Inventor: Tkachenko, Artem Sergeevich, g. Novouralsk Sverdlovskaya obl., 624130 (RU)
(74) Representative: Sloboshanin, Sergej
(86) International application number: PCT/RU2020/000176
(87) International publication number: WO 2021/211001

(57) **Abstract**

The invention relates to means for advertising and informing. The technical result is to expand the functional capabilities of a method and a system for advertising and informing, to raise the effectiveness of same and to expand the existing range of advertising methods. A method of adaptive advertising and informing consists in arranging a peripheral processor in a bag/backpack, equipping the bag/backpack with a video camera and a screen/display which are connected to the peripheral processor and are aimed outward so that an image of people entering the field of view of the video camera can be read with the aid of said video camera, and allowing the visualisation of photo and/or video material on the screen/display according to display criteria set by the user, the continuous monitoring for compliance with said display criteria, the termination of display if one or all of the display criteria are not met, and the generation of a post-display report to allow subsequent processing and analysis of the corresponding data.

## Description

### Field of invention

The invention relates to a means of advertising and information by using various advertising carriers, in particular a bag or backpack which is carried along with a user (a carrier).

### Prior art

The Patent No. RU 167868 for a utility model discloses a bag provided with a multimedia device comprising an interconnected flat display, power supply, microcomputer with an input/output device, the multimedia device being in a single housing placed on the outer surface of the bag, characterized in that the multimedia device is provided with a gyroscope, the display is touch-sensitive and the input/output device is in the form of Bluetooth; the multimedia device can be provided with a motion sensor; the multimedia device can be provided with an accelerometer; the multimedia device is provided with an electronic pedometer.

The patent source No. CN 201514749 discloses a portable advertisement player with a display screen, which is a multimedia player with a large screen; a light display screen capable of playing video and audio files, and a plastic backpack type hard board are movably hooked; an USB interface uploads the video and audio data for advertising; the display screen is connected with an external portable power supply; and therefore, the portable advertisement player can carry out mobile promotion and advertising in people through a backpack type, thereby greatly improving the flexibility of advertising as well as the promotion effect and influence.

The patent No. RU 2399961 for an invention discloses a method of adaptive advertising, which comprises the placement in a place of mass gathering or stream of people an advertising system that operates in two modes - in an adaptive mode and in a mode of continuous operation; the information messages are displayed alternately on the screen in the adaptive mode so that the video block is switched on when the information message starts broadcasting, which reads images of people entering the coverage area, forms their individual digital images, analyses their psychophysical reactions and, following the settings, forms output signals corresponding to each type of reaction, which enters the decision-making block, where the number of positive reactions to each information message is counted and in the next broadcasting cycle of the information message the parameters of this information message change - brightness, saturation, colour gamut, sound volume, timbre; the advertising system is then repeated with all possible combinations of characteristics of each information message, and based on the results accumulated in the decision block, the most effective information message is selected with the characteristics that elicited the greatest number of positive reactions, and which is then broadcast to the advertising device in continuous operation. The method selects the most effective for a given location information message of heterogeneous messages advertising different types of goods or services.

A system and a method of operation related to providing information, including advertising, is known from the application for an invention No. US2019130450.

In the first embodiment thereof, the system according to US application No. US2019130450, comprises a vehicle configured to be used in a combination of a set of services and offer of services; a location determination system configured to determine a current location of the vehicle; a first wireless interface configured to receive offer information and to transmit data regarding the distribution of the offer information, the offer information associated with a geographic area and the services provided in combination with the vehicle; a non-transitory computer-readable medium configured to store the offer information and the distribution of the offer information; a second wireless network interface configured to communicate with a wireless device within a local transmission range of the second wireless interface and transmit the offer wirelessly to an application executed on the wireless device based on the current location of the vehicle, the geographic area associated with the offer and a configuration, advertising or promotional information to be delivered to the mobile device. The second wireless network may additionally be configured to communicate with a downloadable dedicated advertising application executed on the wireless device, wherein the downloadable dedicated advertising application is configured to perform one or more of the following: retrieve advertising information and messages wirelessly over the second wireless network; and receive the advertising information and messages transmitted wirelessly through the second wireless network. The second wireless network can additionally be configured to communicate with an advertising application that is configured to obtain the advertising information and messages over the second wireless network interface, only when being within the wireless range of the first wireless network interface. The vehicle may additionally comprise a commercialization module for tracking the distribution of the offer information. One or more short-range wireless communication protocols may include: Bluetooth; Bluetooth Low Energy (BLE); RFID; DSRC; RuBee; WiFi; Z-Wave; or Zigbee. The permanent machine-readable carrier and the downloadable special advertising application can be accessed through a third network interface. One long-range wireless protocol may include one or more of the following: GSM; CDMA; LTE; or HSPA+. A downloadable specific advertising application may be free for download for users of one or more mobile electronic devices. The vehicle may additionally comprise one or more advertising modules that are configured to track information related to the transmission of advertising information and messages. The vehicle may additionally contain one or more dedicated advertising modules that are configured to track at least one of a number of retrieval requests. The vehicle may additionally contain one or more dedicated advertising modules that are configured to determine a volume of consumer traffic proximate thereto.

A communication system, according to US application No. US2019130450 for providing advertising information and messages related to a user comprises: one or more dedicated advertising systems coupled to a mobile vehicle, comprising: a storage configured for storing and configuration of advertising information or messages and information about the distribution of the advertising information or messages, wherein a first entity is responsible for the mobile vehicle, and a second entity is responsible for the at least one of advertising information, promotional information or messages; a location determination system configured to determine the current location of the communication system; an exterior display to identify the first entity; a first wireless network interface for transmitting advertising information or messages wirelessly to an advertising application executed on one or more mobile electronic devices within a local transmission range, and for wirelessly receiving a configuration identifying types of advertising or advertising information to deliver to the one or more mobile electronic devices from the advertising application executed on the one or more mobile electronic devices within the local transmission range, a second wireless network interface configured for receiving advertising information or messages and for transmitting data regarding distribution information of advertising, advertising information or messages to a processor coupled to the storage, a location determination system, the first wireless network interface and the second wireless network interface, the processor configured to select advertising information based at least in part on the current location, the geographic area associated with the advertising and promotional information and messages, and configuration received from the one or more mobile electronic devices. The system additionally comprises a control system configured to receive location information from the location determination system and provide the location information to an advertising service over the second wireless network interface. The first entity provides additional independent advertising, promotional information or messages that are in addition to at least one of advertising, promotional information or messages provided by the second facility. The system additionally comprises a control system configured to identify demographic information from the advertising application executed on one or more mobile electronic devices.

The US application for invention No. US2019130450 is selected as the closest prior art (prototype).

The disadvantage of all known methods of advertising, including those executed over the above devices and systems, are their limited functionality, lack of adaptability and mobility, as well as efficiency.

In addition, US application for invention No. US2019130450, selected as the closest prior art, represents the technical solution implementing a method and means for advertising intended for an individual entity, i.e., a means of personalized advertising. However, to receive such advertising or information, a person shall have the technical means (e.g., a phone with a pre-installed application) to process the information strictly according to the settings of such an application. This considerably narrows the functionality of the technical solution in the present patent application due to the technical limitation of access to such information/advertisement.

### Disclosure of invention

The technical problem solved by the proposed invention is to extend the functionality of the advertising method and system, to increase its adaptability and effectiveness due to significantly increasing the volume of advertising information provided, to provide adaptation of advertising information to the profile of the consumer of particular advertising information and the location of both the consumer of the advertising information and the sources of advertising information.

The technical result to be achieved by the invention is to extend the functionality of the method and the advertising/informing system, to increase its effectiveness; to expand the arsenal of advertising methods.

The claimed technical result is achieved due to the fact that in the method for adaptive advertising and information, consisting in the presentation with the possibility of visualization information in the form of photo and/or video materials by means of not less than two complexes comprising processors and being interconnected by means of wireless telecommunications, wherein one of the complexes is not intended for movement, and the other complex is made with the possibility of its movement by a carrier, as well as with the possibility of determining the location of the movable complex, wherein the carrier is understood as a person carrying the movable complex, the number of movable complexes is not less than one, according to the invention by providing access of an authorized user to a dedicated personal profile on a central processor of the complex, not intended to be moved, forming information blocks containing information in the form of photo and/or video materials, providing each information block with a label-identifier, forming exposure criteria of the information blocks, providing storage of information blocks with -label-identifiers and exposure criteria in a functional block for storing and processing information block of the central processor and in the functional block for storing and processing information of the peripheral processor of the movable complex, providing communication between the central and the peripheral processors via wireless telecommunication, placing the peripheral processor in a bag/backpack intended to be placed on the carrier in order to move it around an area, providing the bag/backpack with a video camera and a screen/display connected to the peripheral processor and directed outwardly in one direction, placing the video camera and the screen/display with the possibility of reading through the video camera the image of people falling into its coverage area, including people following the carrier, wherein providing the possibility to visualize the photo and/or video materials presented on the screen/display to persons following the carrier, providing conversion of an image of particular people into their individual digital image by means of a functional image processing block connected to the peripheral and/or the central processor, providing storage of information about digital images of people in functional blocks for storing and processing information of the peripheral and central processors, providing display on the screen/display of photo and/or video materials in accordance with the exposure criteria set by the user, wherein the type of information to be exposed is set according to the corresponding label-identifier of the specific information block that correlates with specified exposure criteria, providing continuous monitoring of compliance with the exposure criteria for photo and/or video materials by means of the central processor, providing the possibility of terminating exposing photo and/or video materials on the screen/display if one or all user-specified exposure criteria are not observed, upon completion of the exposure of photo and/or video materials in a functional control block of the central processor, providing for the generation of a report that is intended to be presented in the profile of the authorized user and contains information about a combination of specific parameter values corresponding to the exposure criteria set by the user, achieved during exposure of photo or video materials, for the possibility of their subsequent processing and analysis.

The geolocation parameters of the peripheral processor complex can be set as an information exposure criterion.

The compliance with the geolocation criterion of the peripheral processor complex can be provided by means of a GPS sensor.

The compliance with the geolocation criterion of the peripheral processor complex can be provided by means of a GLONASS sensor.

The compliance with the geolocation criterion of the peripheral processor complex can be provided by means of a GPS tracker.

The compliance with the geolocation criterion of the peripheral processor complex can be provided by means of a GLONASS tracker.

The compliance with the geolocation criterion of the peripheral processor complex can be provided by means of a GLONASS beacon.

An authorized user profile can be accessed after payment, controlled by the central processor.

The peripheral processors can be placed in bags/backpacks moved by carriers that are not connected to each other.

It is advisable to provide connection of the peripheral processor, video camera and screen/display to the power supply block.

The image processing block can be designed as a separate functional block.

The function of the image processing block can be performed by the peripheral processor.

The function of the image processing block can be performed by the central processor. It is possible to set an exposure time as the information exposure criterion.

The compliance with the exposure time criterion can be provided by means of a functional time sensor.

It is possible to set an exposure duration as the information exposure criterion.

The compliance with the exposure duration criterion can be provided by means of a functional time sensor.

It is possible to set an exposure area as the information exposure criterion.

The compliance with the area exposure criterion of can be provided by means of a GPS-sensor.

The compliance with the area exposure criterion can be provided by means of a GLONASS sensor.

The compliance with the area exposure criterion can be provided by means of a GPS tracker.

The compliance with the area exposure criterion can be provided by means of a GLONASS tracker.

The compliance with the area exposure criterion can be provided by means of a GLONASS beacon.

The number of peripheral processors can be set as the information exposure criterion.

The parameters of the target audience for which a particular information is intended can be set as the information exposure criterion.

The functional image processing block can provide for a storage of information about the psychophysical reactions of people in the camera coverage area.

The control of compliance with the photo and/or video exposure criteria can be carried out via both the central and the peripheral processor.

It is advisable to adjust the exposure criteria by analyzing the report generated by the central processor in the user profile.

The communication between the central processor and the peripheral processor is provided by Internet.

The communication between the central and peripheral processors is provided by satellite communication.

The communication between the central processor and the peripheral processor is provided via mobile communication.

The claimed technical result is also achieved due to the fact that in the adaptive advertising and information system, comprising a central processor complex and not less than one peripheral processor complex, being interconnected via wireless telecommunication, the central processor complex is not intended to be moved, the peripheral processor complex is intended to be moved on a carrier, the carrier is meant to be a person carrying the peripheral complex, wherein the peripheral complex is designed with the possibility of determining its location, according to the invention, the central processor complex comprises a central processor and means for payment, the peripheral processor complex comprises a peripheral processor placed in a bag/backpack designed to be carried by the carrier, the bag/backpack is provided with a screen/display and a video camera connected to the peripheral processor and connected to the bag/backpack, the screen/display is placed with the possibility of visualizing an image presented on the screen for persons following the carrier, the video camera is placed with the possibility of reading images of people falling into its coverage area, the screen/display and the video camera are facing outwardly in one direction in order to allow the video camera reading images of people, following the carrier, the video camera is connected to not less than one functional image processing block designed to convert images of particular people into their individual digital images, the functional image processing block is connected to the peripheral processor and/or the central processor, the peripheral processor complex is provided with a geolocation means designed to fix and control the location of the peripheral processor complex, the screen/display is designed to display information in the form of photo and/or video materials with the possibility of visual perception, the peripheral and central processors are provided with functional blocks for storing and processing information, in which is provided storage of information blocks containing information in the form of photo and/or video materials, the peripheral and central processors are provided with functional control blocks designed to provide input/output and transfer information to screen/display in accordance with exposure criteria set by the user, wherein each information block is provided with a label-identifier that correlates with the specified exposure criteria: in the central processor, a profile is allocated for an authorized user, made with the possibility to be accessed by the user authorized in the system, the central processor comprises a functional control and monitoring block designed to control the exposure of information by the peripheral processor complex in accordance with the exposure criteria and to provide the possibility of terminating the exposure of information if one or several exposure criteria are not met, the central processor is designed to generate a report upon completion of the exposure process to be presented in the user profile and comprising information about parameters according to which the photo and/or video materials were exposed in accordance with the exposure criteria to allow adjustment of the exposure criteria and content of information blocks.

The payment means can be designed as a separate functional block.

The payment means can be implemented as a function of the central processor.

It is advisable to connect the video camera, screen/display and the peripheral processor to the power supply block.

The functional image processing block can be designed as a stand-alone device connected to the power supply block.

The functional image processing block, made in the form of a stand-alone device, can be placed in the central processor complex.

The functional image processing block, made as a stand-alone device, can be placed in the peripheral processor complex.

One functional image processing block, designed as a stand-alone device , can be placed in the central processor complex, and another functional image processing block, designed as a separate function block, can be placed in the the peripheral processor complex.

The functional image processing block, designed as a stand-alone device, can be implemented as a separate processor.

The peripheral processor can be designed to perform the function of the image processing block.

The central processor may be designed to perform the function of the image processing block.

The central processor and the peripheral processor may be designed to perform the function of the image processing block.

The peripheral processor, the video camera(s) and the screen/display(s) can be placed inside the bag/backpack.

The peripheral processor, the video camera(s), the screen/display(s) and the functional image processing block can be placed inside the bag/backpack.

The peripheral processor, the video camera(s) and the screen/display(s) can be placed inside the pockets provided in the bag/backpack.

The peripheral processor, the video camera(s), the screen/display(s) and the functional image processing block can be placed inside the pockets provided in the bag/backpack.

The peripheral processor, the power supply block or blocks, the video camera(s), and the functional image processing block can be placed, on the clothing of the bag/backpack carrier, or on the body of the bag/backpack carrier.

The video camera can be provided with a processor.

The processor of the video camera can be designed to perform the function of the image processing block.

The image processing block can be additionally designed to record, store, process and convert into digital form the psychophysical reaction of persons following the carrier.

Geolocation parameters of the peripheral processor complex can be set as an information exposure criterion.

A GPS sensor can be used to control the geolocation criterion of the peripheral processor complex.

A GLONASS sensor can be used to control the geolocation criterion of the peripheral processor complex.

A GPS tracker can be used to control the geolocation criterion of the peripheral processor complex.

A GLONASS tracker can be used to control the geolocation criterion of the peripheral processor complex.

A GLONASS beacon can be used to control the geolocation criterion of the peripheral processor complex.

Access to the authorized user profile can be granted after a payment controlled by the central processor.

The peripheral processors can be placed in bags/backpacks moved by carriers not connected to each other.

Exposure time can be set as the information exposure criterion.

The compliance with the exposure time criterion can be provided by means of a functional time sensor.

The exposure duration can be set as the information exposure criterion.

The compliance with the exposure time criterion can be provided by means of the functional time sensor.

The exposure area can be set as the information exposure criterion.

The compliance with the exposure area criterion can be provided by means of a GPS-sensor.

The compliance with the exposure area criterion can be provided by means of a GLONASS sensor.

The compliance with the criterion of the exposure area can be provided by means of a GPS tracker.

The compliance with the exposure area criterion can be provided by means of a GLONASS tracker.

The compliance with the exposure area criterion can be provided by means of a GLONASS beacon.

The number of peripheral processors can be set as the information exposure criterion.

The parameters of a target audience for which a particular information is intended can be set as the information exposure criterion.

The peripheral processor may additionally comprise a functional control and monitoring block designed to control the exposure of information by the peripheral processor complex in accordance with the exposure criteria and to allow the termination of exposure of information if one or more of the exposure criteria are not met.

The communication between the central and the peripheral processors can be provided via Internet.

The communication between the central and the peripheral processors can be provided via satellite communication.

The communication between the central and the peripheral processors can be provided via mobile communication.

The essence of the claimed method is as follows.

After payment, the authorized user will be granted access to the user profile on the central processor (server).

The user in his user profile in the functional block for storing and processing information of the central processing block generates individual information blocks comprising photo and/or video material (PVM) having advertising or other informational nature. Each individual information block having PVM is provided with a label (identifier) with user-specific criteria for exposing (presenting) information.

The central processor (server) is wirelessly connected to the peripheral processor placed in a bag/backpack designed to be carried by a person (carrier). It is well known that wireless telecommunication means include: Internet, mobile communication, satellite communication systems, etc.

Also the bag/backpack will be provided with a video camera and screen/display connected to the peripheral processor and directed outwardly in one direction. The video camera and the screen/display are placed in such a way that the information presented on the screen/display can be visualized for people following the carrier, wherein allowing that images of people entering the camera coverage area, including people following the carrier, can be read by the video camera. The video camera is connected to a functional image processing block designed to form an individual digital image of people falling within the camera's coverage area. The system makes the decision to display the PVM on the carrier's screen based on the analysis of the digital image of people and is carried out according to the criteria set by the user in his user profile. According to these criteria, provided is displaying on the screen of the PWM carrier for a particular target audience for each particular PWM block.

In addition to forming a digital image of people, the image processing block can provide the analysis of their psychophysical reactions and, according to user settings, provide the formation of output signals corresponding to each type of reaction, further entering the central processor (server) for processing.

The peripheral processor in the information storage and processing block forms the same information blocks comprising photo and/or video materials (PVM) of advertising or other information nature as in the central processor (server). Each individual information block having PVM in the peripheral processor is provided with the same labels (identifiers) as in the central processor (server) with the criteria for exposing (presenting) information.

The criteria for displaying the PVM is set by the user strictly in view of the goals that the user wants to achieve by placing the information. As such information can be used, together or individually :
- exposure time;
- exposure area;
- number of peripheral complexes;
- exposure duration;
- parameters of the target audience, for which particular types and kinds of PVM are intended.

For example, information about a 40-year-old woman, recorded by the video camera, will be stored and processed by the peripheral processor for instant output of the corresponding PVM with similar output criteria, by the criteria "sex", "age", "appearance - classic, informal", etc. as the corresponding parameters "sex female", "age 40", "appearance - classic". The parameters can be any of those proposed by the system to the user at the time of creating the advertising/information campaign or on the basis of other purposes of PVM presentation , set by the user.

Thus, in accordance with the claimed method, by means of wireless telecommunication the entire similar combination of information with PVM and exposure criteria is downloaded into the corresponding functional information storage and processing blocks of both the central processor (server) and each of the peripheral processors.

According to the claimed method, the carrier (a person carrying a bag/backpack) is moved in crowded places, wherein the screen/display presents (exposes) the PVM in accordance with the criteria pre-set by the user. At the same time, the video camera captures images of people following the carrier and falling into the camera coverage area, converting their images into digital images via appropriate image processing block to make decisions about the output of a particular PVM block.

Each carrier moves throughout his area and presents the information that is defined by the user criteria for that area, for a given time, for a given target audience, identified by the video camera, etc.

The control of the exposure area is carried out according to the results of the control of a carrier geolocation , by means of appropriate functional geolocation sensors.

Similarly, the exposure time, duration, and period is controlled by appropriate functional time sensors.

The characteristic "functional" in the present application is used to identify primarily the function performed by the corresponding block, device. Such a function can be performed (implemented) by means of a separate special device, or such a function can be performed by a processor, having the possibility to perform functions according to the control commands entering its input.

The analysis of the target audience for which the corresponding PVM block is exposed, is carried out by the functional image processing block of the peripheral processor, which receives information simultaneously from the video camera capturing persons falling into its coverage area. According to the results of the analysis of the images of such persons, the selection of the PVM to be exposed is performed.

Upon completion of the exposure period, the control block of the central processor generates a report, presented in the user profile, containing information on the particular values of the parameters corresponding to the criteria set by the user, for subsequent analysis and processing, as well as for statistical data and for possible adjustment of the user-selected criteria for exposure to the PVM and types/kinds of PVM.

Therefore, in the method for adaptive advertising and informing, there is the mobility of the advertising/information carrier (carriers), hardware and system possibility to instantly change the PVM on the screen of the carrier due to the characteristics of the environment of the carrier (territorial location, characteristics of the target audience), in connection with the time of day, the time rate of launching an advertising/information campaign, regardless of the number of carriers selected by the user of the system or their territorial location, is very short due to the downloading of the PVM from the central processor to the peripheral processor(s) for storing and processing the PVM via wireless communication; effectiveness of advertising and informing is also increased due to the instant user report on the progress of the advertising/information campaign and the possibility of adjusting the parameters of the advertising/information campaign, which the user can receive in his account (profile) on the central processor (server).

The claimed method for adaptive advertising is implemented by a system that comprises two hardware-software complexes connected by wireless telecommunication means:
- central processor complex.
- peripheral processor complex.

At the same time, the adaptive advertising and information system comprises the following system parts: central processor with algorithms (software products) for system operation, peripheral processors (peripheral processor) with algorithms (software products) for system operation and decision-making about exposure of one or another PVM at the current moment, screen, video camera, power supply element (elements), territorial positioning sensor (geolocation), and time sensor.

The central processor complex comprises the central processor (server) itself and payment means, either as a separate device or as one of the functions performed by the central processor.

The peripheral processor complex comprises the peripheral processor itself, placed in a bag/backpack that is designed to be carried by the carrier (person). The bag/backpack has a screen/display and a video camera connected to the peripheral processor and connected to the bag/backpack.

The peripheral processors as well as other system blocks can be placed on the carrier's clothing, as well as on the body of the bag/backpack carrier, providing that these blocks and the processor communicate in any available way (by wires or wirelessly) with the system components placed on the backpack/bag carried by the carrier.

At the same time, the screen/display is placed with the possibility of visualization of the image presented on the screen to the persons following the carrier.

The video camera is placed with the possibility to read the image of people falling into the cameras coverage area.

The screen/display and the video camera are facing outwardly in the same direction so that the video camera reads exactly the people who are viewing the information presented on the screen/display.

The power of the screen, video camera and peripheral processor is provided by the power supply block. All structural elements of the peripheral complex (peripheral processor complex) are placed either inside the backpack/bag or inside the pockets with which the backpack/bag is provided, or outside the backpack/bag. The peripheral processor is designed with the possibility to track its own geolocation corresponding to the geolocation of the backpack/bag, or the backpack/bag is provided with separate means of determining its own geolocation. Such means can be a GPS-sensor (GPS-tracker, GPS-beacon), GLONASS-sensor (GLONASS-tracker, GLONASS-beacon).

Each peripheral processor complex is provided (in analogy with the invention according to the RU patent No. 2399961) with an image processing block connected to the video camera(s), forming individual digital images of people falling into the viewing area, analyzing their psychophysical reactions and, according to the settings, forming output signals corresponding to each type of reaction, which are directed further to the central processor (server) for processing.

The image processing block can be implemented either as a separate block, or it can be a functional part of the video camera, or it can be a functional part of the peripheral processor, or it can be implemented on a server. The video camera can function as an image processing block if it is provided with a processor that allows the video camera to be controlled and operated in various modes, in combination with various devices.

As a stand-alone image processing block, it can be implemented on the basis of a separate processor.

The system may comprise several peripheral processor complexes. The number of peripheral complexes involved in advertising/information campaign is set by the user.

The central processor (server) is connected to each peripheral processor via wireless telecommunication.

In this case, the central processor is designed with the possibility to access the corresponding functional block for storing and processing information on the central and peripheral processors of only a user authorized in the system. All information to which the authorized user has access is contained in his profile.

The system is considered to be ready for operation when the central processor and each peripheral processor provide storage of PVM, their exposure criteria, as well as the possibility to process the corresponding PVM in accordance with their exposure criteria. The peripheral processors can comprise different PVM at the user's discretion. But at the same time, the central processor provides storage and the possibility to process all PVM stored in all peripheral complexes, according to the user's criteria.

The central processor contains a functional analysis block, which provides the formation of a report, presented in the user's profile, comprising information about particular values of parameters, corresponding to the criteria set by the user, for their subsequent analysis and processing, as well as for obtaining statistical data and for possible correction of the user-selected criteria for exposure to PVM and kinds/types of PVM.

That is, the claimed method and system allow not only to present advertising or other information to general public, but also to control its effectiveness, correcting the parameters of the system based on the results of such control.

The main function of the peripheral processor complex in this case is to provide a direct presentation of the PVM according to the criteria set by the user, for those following the carrier and being able to visually perceive the information presented on the screen.

The main function of the central processor in this system is to allow the user to create and manage the advertising and information campaign on a required number of peripheral devices from his account, as well as to monitor the effectiveness of the system by presenting reports to the user. In addition, the central processor, depending on the system configuration, can perform the image processing function with the corresponding image processing block. In addition, the entire system is controlled and monitored by the central processor.

The high adaptability of the claimed method and system is provided by the fact that the displaying of information is performed for a particular target audience according to the results of analyzing images (digital images) of people following the carrier and recorded by a video camera, or according to the results of analyzing the geolocation and established location of the carrier information can be displayed on the screen about goods presented for example in the shopping center, inside or near which walks (moves) the carrier with the bag/backpack.

The high adaptability is achieved by providing the possibility to present information on the screen/display that is relevant either to a particular target audience, or a particular location, or time of year, day, etc.

The expansion of functionality and efficiency of the claimed method and system are provided due to the fact that the representation of PVM can be carried out on several peripheral complexes (peripheral complex - peripheral processor complex), which can be placed on the carriers located at different points of the country, the world. The number of users creating their profile on the central processor can also be any, based on the power of the central processor (server).

The information being exposed is changed automatically according to user-specified criteria when the carrier geolocation changes, when the target audience following him changes, and when the exposure duration time changes.

When the backpack/bag carrier leaves one geolocation area and enters another geolocation area, which will be detected by the peripheral processor or GPS sensor, the screen will present information intended for presentation in the new geolocation area.

The claimed method and system allow simultaneous presentation of advertising information from various users, controlling the presented information from a particular user, such as time, geolocation, and target audience.

### Brief description of drawings

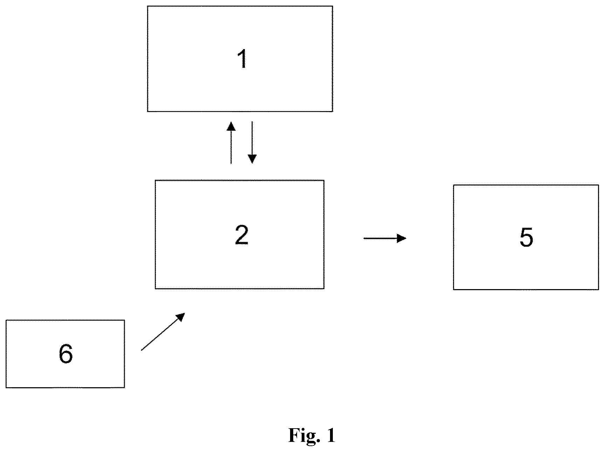

Fig. 1 shows a block diagram implementing the claimed method.

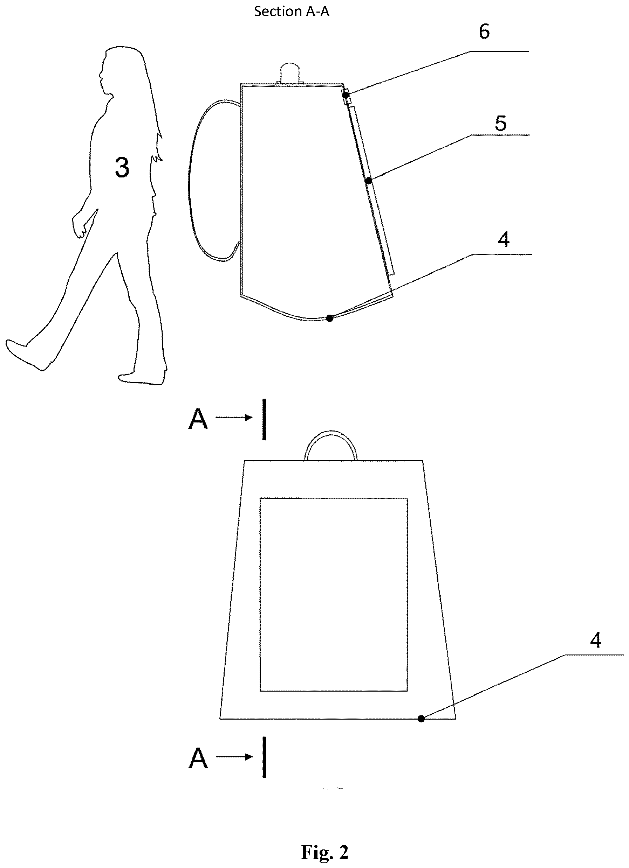

Fig. 2 shows the backpack of the peripheral complex.

### Implementation of the invention

The claimed system for adaptive advertising and information comprises a complex of a central processor 1 and a complex of a peripheral processor 2, being interconnected by means of Internet communication. The central processor 1 complex is not intended to be moved; the peripheral processor 2 complex is intended to be moved on a carrier 3, which is the advertising agent. The central processor 1 complex comprises immediately the central processor 1 and a payment means (not shown in the figure). The peripheral processor 2 complex comprises the peripheral processor 2 placed in a backpack 4 (either on the carrier's clothing or on the carrier's body). The backpack 4 is provided with a screen 5 and a video camera 6 (there can be several video cameras), connected to the peripheral processor 2 and to the backpack 4. The screen 5 is placed on the outer side of the backpack 4 with the possibility of visualization the image presented on the screen for persons following the carrier 3. The video camera 6 is placed with the possibility to read images of people falling into its coverage area. The screen 5 and the video camera 6 are facing outwardly in one direction. The video camera 6 is connected to one functional image processing block designed to convert images of particular people into their individual digital images. The functional image processing block is designed as a functional element of the peripheral processor 2. The peripheral processor complex is provided with a GPS sensor for determining and controlling the location of the peripheral processor 2 complex. The screen is designed to display information in the form of photo and/or video material. The peripheral and the central processors 1 and 2 are provided with functional blocks for storing and processing of information, wherein the blocks provide the storage of information blocks comprising information in the form of photo and/or video materials. Each information block is provided with an label-identifier, allowing determining what information is required to be displayed on the screen according to the exposure criteria. Each combination of exposure criteria corresponds to its own information block, selected in accordance with the assigned label-identifier. The peripheral and central processors 1 and 2 are provided with functional control blocks designed to provide input/output and transfer information to screen 5 in accordance with the exposure criteria set by the user. A profile is allocated in the central processor 1 for a particular authorized user. In addition, the central processor 1 contains a functional control and monitoring block designed to control the exposure of information by the peripheral processor complex in accordance with the exposure criteria and to allow the termination of exposure of information if one or more of the exposure criteria are not met. The central processor 1 is designed to generate a report upon completion of the exposure process, to be presented in the user profile and comprising information about the parameters according to which the photo and/or video materials were exposed in accordance with the exposure criteria to allow the adjustment of the exposure criteria and content of the information blocks.

The claimed method is implemented as follows.

The authorized user is granted access to a dedicated personal profile on the central processor 1, information blocks comprising information in the form of photos and/or videos are generated and each information block is provided with a label-identifier. Criteria for exposure of information blocks are formed, for example the following criteria are set:
- exposure time is January 5, 2020 from 9:00 to 20:00 o'clock;
- exposure area - the area of the shopping center "Raduga" in Yekaterinburg;
- number of peripheral complexes - 1 pc;
- exposure duration - each information block being exposed for at least 10 minutes;
- parameters of the target audience - children under the age of 10.

The backpack 4 is placed on the back of the advertising agent, who starts to move and walks around a given area. As soon as the video camera captures appearance of children with the age of under 10 years (approximately) behind the back of the advertising agent, the system provides the display of 5 photo and video materials designed for this target audience. The display of the PVM on the screen 5 is carried out according to user-specified criteria, including the sequence of the output of this or that information.

After 20:00 o'clock, on January 5, 2020, there is a command from the central processor 1 terminating the exposure. After that, the central processor generates a report comprising, for example, the following information: number of children under 10 being exposed to the information presented, their reaction (positive, negative, indifferent) to the information, analysis of changes in sales of goods, information about which was presented on the screen.

The report is sent to the profile of the authorized user, who determines whether it is appropriate to adjust the content of the information blocks and the criteria for displaying information and makes the appropriate adjustments, or conversely, having assessed the effectiveness of the advertising, decides to increase the number of personal processors and to expand the area of information exposure.

## Claims

1. A method for adaptive advertising and informing, consisting in presenting with the possibility of visualisation information in the form of photo and/or video materials by means of at least two complexes comprising processors and being interconnected via wireless telecommunication, wherein one of the complexes is not intended for movement, and the other complex is made with the possibility of its movement by a carrier, as well as with the possibility of determining the location of the moveable complex, wherein the carrier is understood as a person carrying the moveable complex, the number of moveable complexes is not less than one, **characterized by** providing access of an authorized user to a dedicated personal profile on a central processor of the complex, not intended for movement, forming information blocks containing information in the form of photo and/or video materials, providing each information block with a label-identifier, forming exposure criteria of the information blocks, providing storage of information blocks with label-identifiers and exposure criteria in a functional block for storing and processing information of the central processor and in a functional block for storing and processing information of a peripheral processor of the movable complex, providing communication between the central and the peripheral processors via wireless telecommunication, placing the peripheral processor in a bag/backpack designed to be placed on the carrier in order to move it around an area, providing the bag/backpack with a video camera and a screen/display connected to the peripheral processor and directed outwardly in one direction, placing the video camera and the screen/display with the possibility of reading through the video camera images of people falling into its coverage area, including people following the carrier, wherein providing the possibility to visualise the photo and / or video materials presented on the screen/display to persons following the carrier, providing conversion of an image of particular people into their individual digital image by means of a functional image processing unit connected to the peripheral and/or the central processor, providing storage of information about digital images of people in functional blocks for storing and processing information of the peripheral and central processors, providing display on the screen/display of photo and/or video materials in accordance with the exposure criteria set by the user, wherein the type of information to be exposed is set according to the corresponding label-identifier of the specific information block that correlates with specified exposure criteria, providing continuous monitoring of compliance with the exposure criteria of photo and/or video materials by means of the central processor, providing the possibility of terminating exposing photo and/or video materials on the screen/display if one or all of the user-specified critical exposure criteria are not observed, upon completion of the exposure of photo and/or video materials in a functional control block of the central processor providing for generation of a report that is intended to be presented in the profile of the authorized user and contains information about a combination of specific parameter values corresponding to the exposure criteria set by the user, achieved during exposure of the photo or video materials, for the possibility of their subsequent processing and analysis.

2. The method according to claim 1, **characterized by** setting the geolocation parameters of the peripheral processor complex as the information exposure criterion.

3. The method according to claim 2, **characterized in that** the geolocation criterion of the peripheral processor complex is met by a GPS sensor.

4. The method according to claim 2, **characterized in that** the geolocation criterion of the peripheral processor complex is met by a GLONASS sensor.

5. The method according to claim 2, **characterized in that** the geolocation criterion of the peripheral processor complex is enforced by a GPS tracker.

6. The method according to claim 2, **characterized in that** the geolocation criterion of the peripheral processor complex is enforced by a GLONASS tracker.

7. The method according to claim 2, **characterized in that** the geolocation criterion of the peripheral processor complex is met by a GLONASS beacon.

8. The method according to claim 1, **characterized in that** access to the authorized user profile is provided after a payment controlled by the central processor.

9. The method according to claim 1, **characterized in that** the peripheral processors are placed in bags/backpacks moved by unconnected carriers.

10. The method according to claim 1, **characterized in that** the peripheral processor, the video camera and the screen/display are connected to a power supply unit.

11. The method according to claim 1, **characterized in that** the image processing unit is designed as a separate functional unit.

12. The method according to claim 1, **characterized in that** the function of the image processing unit is performed by a peripheral processor.

13. The method according to claim 1, **characterized in that** the function of the image processing unit is performed by the central processor.

14. The method according to claim 1, **characterized by** setting the exposure time as the criterion for exposure of the information.

15. The method according to claim 14, **characterized in that** the exposure time criterion is met by a functional time sensor.

16. The method according to claim 1, **characterized by** setting the duration of exposure as the information exposure criterion.

17. The method according to claim 16, **characterized in that** the exposure time criterion is met by a functional time sensor.

18. The method according to claim 1, **characterized by** setting the exposure area as the criterion for exposing the information.

19. The method according to claim 18, **characterized in that** the criterion of the exposure area is ensured by a GPS-sensor.

20. The method according to claim 18, **characterized in that** compliance with the criterion of the exposure area is ensured by means of a GLONASS sensor.

21. The method according to claim 18, **characterized in that** the criterion of the exposure area is ensured by a GPS tracker.

22. The method according to claim 18, **characterized in that** compliance with the criterion of the exposure area is ensured by means of a GLONASS tracker.

23. The method according to claim 18, **characterized in that** compliance with the criterion of the exposure area is ensured by means of a GLONASS beacon.

24. The method according to claim 1, **characterized by** setting the number of peripheral processors as the criterion for exposing the information.

25. The method according to claim 1, **characterized by** setting parameters of a target audience for which the particular information is intended as the criterion for exposing the information.

26. The method according to claim 1, **characterized by** providing in the functional block of image processing storage of information about psychophysical reactions of persons falling into the coverage area of the video camera.

27. The method according to claim 1, **characterized by** carrying out the control of the exposure criteria of the photo and/or video materials by both the central processor and the peripheral processor.

28. The method according to claim 1, **characterized by** adjusting the exposure criteria according to the results of the analysis report generated by the central processor in the user profile.

29. The method according to claim 1, **characterized in that** communication between the central processor and the peripheral processor is provided via the Internet.

30. The method according to claim 1, **characterized in that** communication between the central processor and the peripheral processor is provided via satellite communication.

31. The method according to claim 1, **characterized in that** communication between the central processor and the peripheral processor is provided via mobile communication.

32. An adaptive advertising and information system, comprising a central processor complex and not less than one peripheral processor complex interconnected via wireless telecommunication, the central processor complex is not intended to be moved, the peripheral processor complex is intended to be moved on a carrier, the carrier is meant to be a person carrying the peripheral complex, wherein the peripheral complex is designed with the possibility of determining its location, **characterized in that** the central processor complex includes a central processor and means for payment, the peripheral processor complex comprises a peripheral processor placed in a bag/backpack designed to be carried by the carrier, the bag/backpack is provided with a screen/display and a video camera connected to the peripheral processor and connected to the bag/backpack, the screen/display is placed with the possibility of visualising an image presented on the screen for persons following the carrier, the video camera is placed with the possibility of reading images of people falling into its coverage area, the screen/display and the video camera are facing outwardly in one direction in order to allow the video camera reading images of people following the carrier, the video camera is connected to not less than one functional image processing block designed to convert images of particular people into their individual digital images, the functional image processing block is connected to the peripheral processor and/or the central processor, the peripheral processor complex is provided with a geolocation means designed to fix and control the location of the peripheral processor complex, the screen/display is designed to display information in the form of photo and/or video materials with the possibility of visual perception, the peripheral and central processors are provided with functional blocks for storing and processing information, in which is provided storage of information blocks containing information in the form of photo and/or video materials, the peripheral and central processors are provided with functional control blocks designed to provide input/output and transfer information to the screen/display in accordance with exposure criteria specified by the user, wherein each information block is provided with a label-identifier that correlates with the specified exposure criteria, in the central processor a profile is allocated for an authorized user, made with the possibility to be accessed by the user authorized in the system, the central processor comprises a functional control and monitoring block designed to control the exposure of information by the peripheral processor complex in accordance with the exposure criteria and to provide the possibility of terminating the exposure of information if one or several exposure criteria are not met, the central processor is designed to generate a report upon completion of the exposure process to be presented in the user profile and comprising information about parameters according to which the photo and/or video materials were exposed in accordance with the exposure criteria to allow adjustment of the exposure criteria and the content of the information blocks.

33. The system according to claim 32, **characterized in that** the payment means is in the form of a separate functional unit.

34. The system according to claim 32, **characterized in that** the payment means is implemented as a function of the central processor.

35. The system according to claim 32, **characterized in that** the video camera, screen/display, and peripheral processor are coupled to a power supply.

36. The system according to claim 32, **characterized in that** the functional image processing unit is designed as an independent device associated with the power supply unit.

37. The system according to claim 36, **characterized in that** the image processing function block, designed as an independent device, is located in the complex of the central processor.

38. The system according to claim 36, **characterized in that** a functional image processing unit, designed as a stand-alone device, is placed in the peripheral processor complex.

39. The system according to claim 36, **characterized in that** one image processing functional unit, designed as a separate unit, is located in the central processor complex, and another image processing functional unit, designed as a separate functional unit, is located in the peripheral processor complex.

40. The system according to claim 36, **characterized in that** the image processing function block, made as an independent device, is implemented as a separate processor.

41. The system according to claim 32, **characterized in that** the peripheral processor is provided to perform the function of the image processing block.

42. The system according to claim 32, **characterized in that** the central processor is provided to perform the function of the image processing block.

43. The system according to claim 32, **characterized in that** a central processor and a peripheral processor are provided to perform the image processing unit function.

44. The system according to claim 32, **characterized in that** the peripheral processor, video camera and screen/display are placed inside the bag/backpack.

45. The system according to claim 36, **characterized in that** the peripheral processor, video camera, screen/display and image processing function block are placed inside the bag/backpack.

46. The system according to claim 32, **characterized in that** the peripheral processor, video camera and screen/display are placed inside the pockets with which the bag/backpack is provided.

47. The system according to claim 36, **characterized in that** the peripheral processor, video camera, screen/display and image processing function block are placed inside the pockets with which the bag/backpack is provided.

48. The system according to claim 32, **characterized in that** the video camera is provided with a processor.

49. The system according to claim 48, **characterized in that** the video camera processor is designed to perform the image processing unit function.

50. The system according to claim 32, **characterized in that** the image processing block is additionally designed to record, store, process and digitize a psychophysical reaction of the persons following the carrier.

51. The system according to claim 32, **characterized in that** geolocation parameters of the peripheral processor complex are set as the information exposure criterion.

52. The system according to claim 51, **characterized in that** a GPS sensor is provided to control the geolocation criterion of the peripheral processor complex.

53. The system according to claim 51, **characterized in that** a GLONASS sensor is provided to control the geolocation criterion of the peripheral processor complex.

54. The system according to claim 51, **characterized in that** a GPS tracker is provided to control the geolocation criterion of the peripheral processor complex.

55. The system according to claim 51, **characterized in that** a GLONASS tracker is provided to control the geolocation criterion of the peripheral processor complex.

56. The system according to claim 51, **characterized in that** a GLONASS beacon is provided to control the geolocation criterion of the peripheral processor complex.

57. The system according to claim 32, **characterized in that** access to the full functionality of the authorized user profile is provided after payment controlled by the central processor.

58. The system according to claim 32, **characterized in that** the peripheral processors are housed in pouches/backpacks moved by unconnected carriers.

59. The system according to claim 32, **characterized in that** an exposure time is set as the information exposure criterion.

60. The system according to claim 59, **characterized in that** compliance with the exposure time criterion is ensured by a functional time sensor.

61. The system according to claim 32, **characterized in that** an exposure duration is set as the information exposure criterion.

62. The system according to claim 61, **characterized in that** compliance with the exposure duration criterion is ensured by a functional time sensor.

63. The system according to claim 32, **characterized in that** an exposure area is set as the information exposure criterion.

64. The system according to claim 63, **characterized in that** compliance with the criterion of the area of exposure is provided by a GPS-sensor.

65. The system according to claim 63, **characterized in that** compliance with the exposure area criterion is ensured by a GLONASS sensor.

66. The system according to claim 63, **characterized in that** compliance with the criterion of the exposure area is ensured by a GPS tracker.

67. The system according to claim 63, **characterized in that** compliance with the exposure area criterion is ensured by means of a GLONASS tracker.

68. The system according to claim 63, **characterized in that** compliance with the exposure area criterion is ensured by means of a GLONASS beacon.

69. The system according to claim 32, **characterized in that** a number of peripheral processors is set as the information exposure criterion.

70. The system according to claim 32, **characterized in that** parameters of a target audience for which the particular information is intended are set as the information exposure criterion.

71. The system according to claim 32, **characterized in that** the peripheral processor additionally comprises a functional control and monitoring block designed to control the exposure of information by the peripheral processor complex in accordance with the exposure criteria and to enable termination of exposure of information if one or more of the exposure criteria are not met.

72. The system according to claim 32, **characterized in that** communication between the central processor and the peripheral processor is provided via the Internet.

73. The system according to claim 32, **characterized in that** communication between the central processor and the peripheral processor is provided via satellite communication.

74. The system according to claim 32, **characterized in that** communication between the central processor and the peripheral processor is provided via mobile communication.
